# EUROPÄISCHE PATENTSCHRIFT

(11) **EP 1 498 213 B1**
(45) Veröffentlichungstag und Bekanntmachung des Hinweises auf die Patenterteilung: **22.10.2008**
(21) Anmeldenummer: 03016297.8
(22) Anmeldetag: 18.07.2003
(51) Int. Cl.: B23K 26/06, G02B 26/02

(54) **Laserbearbeitungsmaschine mit Modulator zum Verändern der Laserleistung**
Apparatus for laser working with a modulator for the laser power
Appareil d'usinage par laser avec modulateur de puissance du laser

(43) Veröffentlichungstag der Anmeldung: 19.01.2005
(73) Patentinhaber: TRUMPF Laser GmbH + Co. KG, 78713 Schramberg (DE)
(72) Erfinder: Dorsch, Friedhelm, 78658 Zimmen o.R. (DE); Huber, Rudolf, 78647 Trossingen (DE); Wallmeroth, Klaus, 78658 Zimmern (DE)
(74) Vertreter: Kohler Schmid Möbus

(56) Entgegenhaltungen:
- EP-A- 0 201 306
- US-A- 4 675 500
- US-A- 5 028 136
- US-A- 5 427 733
- US-A- 5 596 590
- PATENT ABSTRACTS OF JAPAN vol. 006, no. 050 (M-120), 3. April 1982 (1982-04-03) & JP 56 165583 A (T C C KK), 19. Dezember 1981 (1981-12-19)

## Beschreibung

Die vorliegende Erfindung betrifft eine Laserbearbeitungsmaschine mit einem Laser und einem Modulator, der die Leistung des vom Laser abgestrahlten Laserstrahls verändert, gemäß dem Oberbegriff des Anspruchs 1. Eine solche Laserbearbeitungsmaschine ist aus der WO 02/05345 bekannt.

Eine derartige Laserbearbeitungsmaschine ist beispielsweise auch durch die CH 658 944 A5 bekannt geworden.

Die aus der CH 658 944 A5 bekannte Laserbearbeitungsmaschine weist einen Modulator zur Veränderung der Leistungsdichte eines Laserstrahls auf. Dazu umfasst der optische Modulator eine Anzahl rotierender Strahlzerhackerscheiben, die im Strahlengang des Laserstrahls angeordnet und je mit einer Anzahl kreisförmiger Öffnungen versehen sind. Wenn die Strahlzerhackerscheiben rotiert werden, wird der Laserstrahl zerhackt und gepulst, so dass er unterbrochen als Impulsfolge zum zu bearbeitenden Werkstück gelangt. Die Rotation der Strahlzerhackerscheiben wird detektiert und auf einen vorgegebenen Wert gesteuert. Allerdings hat diese bekannte Laserbearbeitungsmaschine den Nachteil, dass für jeden neu gewünschten zeitlichen Verlauf der Laserleistung die zugehörigen Steuerparameter stets neu ermittelt werden müssen und dass sich der gewünschte zeitliche Verlauf der Laserleistung trotz gleichbleibender Steuerparameter unbemerkt, z.B. aufgrund von Alterungseffekten, ändern kann. Außerdem muss für eine Änderung der Pulshöhe die Anregungsleistung innerhalb des Lasers geändert werden, wodurch sich die Lebensdauer der Pumpquelle (z.B. Halbleiter-Laserdiode oder Gasentladungslampe bei einem Festkörperlaser) verringert.

Demgegenüber ist es die Aufgabe der vorliegenden Erfindung, eine Laserbearbeitungsmaschine der eingangs genannten Art dahingehend weiterzubilden, dass ein gewünschter zeitlicher Verlauf der Laserleistung mit möglichst wenig Aufwand erzeugt werden kann.

Diese Aufgabe wird erfindungsgemäß durch einen Regelkreis, gemäß dem Anspruch 1 gelöst.

Erfindungsgemäß wird die Ausgangsleistung des Lasers auf die für den jeweiligen Bearbeitungsprozess maximal benötigte Laserleistung im Wesentlichen konstant eingestellt, die dann mittels des Modulators auf den gewünschten Leistungsverlauf schnell moduliert wird. Durch die Regelung des Modulators kann der Laser mit im Wesentlichen konstanter bzw. langsam veränderlicher Anregungsleistung betrieben werden, so dass an der Pumpquelle des Lasers während des Bearbeitungsprozesses keine Lebensdauer mindernde schnelle Wechsellast auftritt und sich dadurch die Einsatzdauer (Standzeit) des Lasers bzw. der Pumpquelle (z.B. Lampen bzw. Laserdioden) deutlich erhöht. Darüber hinaus hat die bei einigen Lasern mögliche Laserdynamik, wie z.B. Unterschwinger der Laserleistung beim Einschalten der Pumpquelle oder Wellenlängenverschiebungen bei Diodenlasern, keine Relevanz für die am Werkstück auftreffende Leistung. Vorteilhafterweise kann an einem konstanten Arbeitspunkt des Lasers gearbeitet werden, so dass die Laserstrahleigenschaften wie Divergenz, Strahlparameterprodukt, Strahldurchmesser etc. konstant bleiben.

Der Regelkreis weist bevorzugt den im Strahlengang des Laserstrahls angeordneten Modulator, einen die Leistung des modulierten Laserstrahls erfassenden Sensor und eine Regeleinheit auf, die den Modulator auf der Basis der Messwerte des Sensors ansteuert.

Vorzugsweise ist der Modulationsgrad des Modulators, im allgemeinen der Reflexions- oder Transmissionsgrad, zwischen einem Minimalwert und einem Maximalwert kontinuierlich verstellbar. Im Idealfall lässt sich der Modulationsgrad durch entsprechendes elektrisches Ansteuern des Modulators zwischen ca. 0% und ca. 100% kontinuierlich ändern.

In einer ersten bevorzugten Ausführungsform der Erfindung weist der Modulator eine in den Strahlengang des Laserstrahls hineinbewegbare Blende, insbesondere einen Kantenspiegel, und einen Stellantrieb für die Blende auf. Der Vorteil dieser Ausführungsform besteht in der einfachen Realisierung z.B. als drehbarer Spiegel mit scharfer Kante, die einen Teil des Laserstrahls reflektiert und damit ausblendet.

In einer zweiten bevorzugten Ausführungsform der Erfindung weist der Modulator einen im Strahlengang des Laserstrahls beweglich gelagerten Spiegel, einen Stellantrieb für den Spiegel und eine im Strahlengang des vom Spiegel reflektierten Laserstrahls angeordnete Blende, insbesondere eine Lochblende, auf. Durch die Bewegung des Spiegels schwenkt der Laserstrahl über die Kante der Blende, so dass ein Teil des Laserstrahls ausgeblendet wird.

In einer dritten bevorzugten Ausführungsform der Erfindung weist der Modulator einen in den Strahlengang des Laserstrahls hineinbewegbaren Spiegel, dessen Reflexionsgrad sich in Bewegungsrichtung des Spiegels ändert, und einen Stellantrieb für den Spiegel auf. Der Spiegel kann beispielsweise ein sogenannter Verlaufspiegel mit einer reflektierenden Beschichtung sein, deren Reaktivität in einer Richtung zunimmt, wodurch sich der Reflexionsgrad des Spiegels in dieser Richtung entsprechend ändert.

In einer vierten bevorzugten Ausführungsform der Erfindung weist der Modulator zwei transparente optische Körper mit einander zugewandten parallelen Außenflächen und einen Stellantrieb zum Verändern des Abstands der beiden Körper auf, wobei der in den ersten Körper eingekoppelte Laserstrahl schräg auf die Außenfläche des ersten Körpers trifft. Abhängig vom Abstand zwischen beiden Außenflächen wird der Laserstrahl entweder innen an der Außenfläche des ersten Körpers totalreflektiert, d.h. nicht in den zweiten Körper eingekoppelt, oder aber teilweise oder vollständig in den zweiten Körper eingekoppelt. Diese Ausführungsform hat den Vorteil, dass der Abstand der beiden Außenflächen sehr schnell, z.B. mittels eines piezoelektrischen Antriebs, im µm-Bereich geändert und folglich auch die modulierte Laserleistung sehr schnell geregelt werden kann.

Als Stellantriebe für den Modulator sind besonders elektromagnetische, magnetostriktive oder piezoelektrische Antriebe geeignet.

In einer fünften bevorzugten Ausführungsform der Erfindung ist der Modulator ein elektro-optischer Modulator (z.B. Pockelszelle) oder ein akusto-optischer Modulator.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch die erfindungsgemäße Laserbearbeitungsmaschine mit einem im Strahlengang eines Laserstrahls angeordneten Modulator;
- Fig. 2a: eine erste Ausführungsform des Modulators der Fig. 1;
- Fig. 2b: ein Diagramm, in dem die modulierte Laserleistung in Abhängigkeit von der Drehstellung eines in Fig. 2a gezeigten Kantenspiegels des Modulators aufgetragen ist;
- Fig. 3a: eine zweite Ausführungsform des Modulators der Fig. 1;
- Fig. 3b: ein Diagramm, in dem die modulierte Laserleistung in Abhängigkeit von der Drehstellung eines in Fig. 3a gezeigten Umlenkspiegels des Modulators aufgetragen ist;
- Fig. 4a: eine dritte Ausführungsform des Modulators der Fig. 1;
- Fig. 4b: ein Diagramm, in dem die modulierte Laserleistung in Abhängigkeit von der Verschiebestellung eines in Fig. 4a gezeigten Verlaufspiegels des Modulators aufgetragen ist;
- Fign. 5a und 5b: eine vierte Ausführungsform des Modulators der Fig. 1;
- Fig. 5c: ein Diagramm, in dem die modulierte Laserleistung in Abhängigkeit des Abstands zweier Koppelflächen des Modulators aufgetragen ist; und
- Fig. 6: beispielhaft einen mit dem Modulator geregelten Verlauf der modulierten Laserleistung.

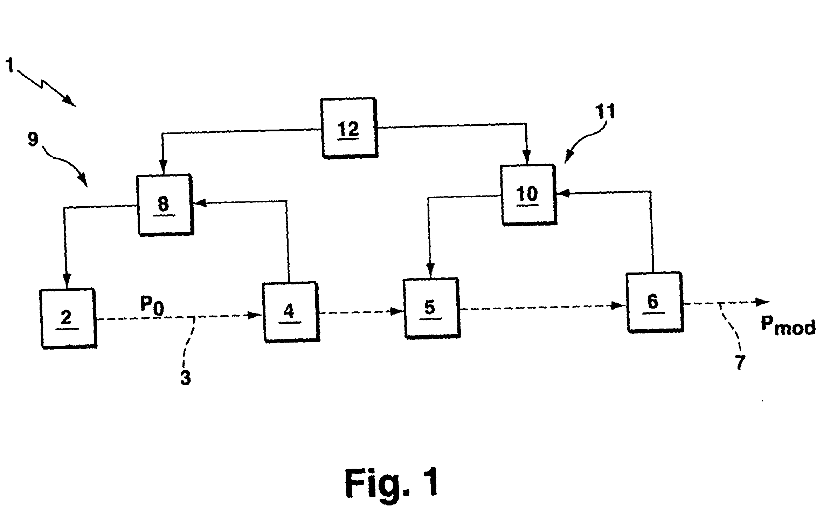

Die in **Fig. 1** gezeigte Laserbearbeitungsmaschine **1** umfasst einen Laser **2**, z.B. einen YAG-Laser, zum Erzeugen eines Laserstrahls **3** sowie, im Strahlengang des Laserstrahls 3 hintereinander angeordnet, einen ersten Sensor (Leistungsmesswertaufnehmer) **4** zur Erfassung der Leistung **P₀** des Laserstrahls 3, einen ansteuerbaren Modulator **5** zum Verändern der Leistung des Laserstrahls **3** und einen zweiten Sensor **6** (Leistungsmesswertaufnehmer) zur Erfassung der Leistung **P_{mod}** des modulierten Laserstrahls **7**. Mit dem modulierten Laserstrahl 7 wird ein Werkstück (nicht gezeigt) bearbeitet.

Die vom ersten Sensor 4 erfasste Leistung P₀ des Laserstrahls 3 wird einer ersten Regeleinheit **8** zugeführt, welche die Anregungsleistung der Pumpquelle (z.B. Gasentladungslampen oder Laserdioden) des Lasers 2 derart regelt, dass der vom Laser 2 erzeugte Laserstrahl 3 eine zeitlich im Wesentlichen konstante Ausgangsleistung P₀ hat. Mit anderen Worten bilden die erste Regeleinheit 8, der erste Sensor 4 und der Laser 2 einen ersten Regelkreis **9**, der die Ausgangsleistung P₀ des Laserstrahls 3 zeitlich konstant hält oder langsam verändert.

Die vom zweiten Sensor 6 erfasste Leistung P_{mod} des modulierten Laserstrahls 7 wird einer zweiten Regeleinheit **10** zugeführt, die den Modulator 5 elektrisch derart ansteuert, dass die modulierte Laserleistung P_{mod} einen vorgegebenen zeitlichen Verlauf hat. Mit anderen Worten bilden die zweite Regeleinheit 10, der zweite Sensor 6 und der Modulator 5 einen zweiten Regelkreis **11**, der die Ausgangsleistung P₀ des Laserstrahls 3 entsprechend einem vorgegebenen zeitlichen Laserleistungsverlauf moduliert.

Über eine interne bzw. externe Maschinensteuerung **12** werden der ersten Regeleinheit 8 die gewünschte Ausgangsleistung P₀ und der zweiten Regeleinheit 10 der gewünschte zeitliche Verlauf der modulierten Leistung P_{mod} vorgegeben.

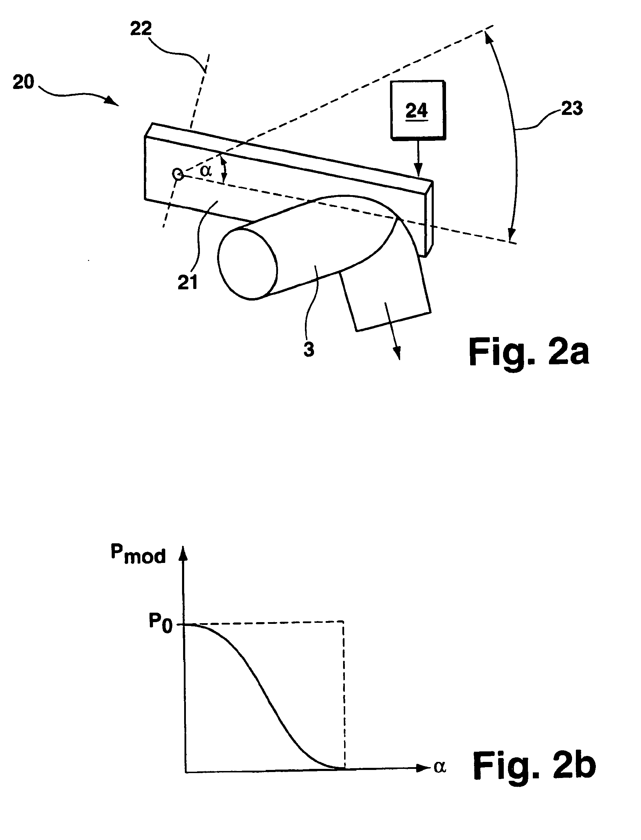

Der in **Fig. 2a** gezeigte Modulator **20** umfasst einen Kantenspiegel **21**, der um die Achse **22** drehbar (Doppelpfeil **23**) ist, und einen z.B. als Schrittmotor ausgestalteten Stellantrieb **24**, um eine Kante des Spiegels 21 in den Strahlengang des Laserstrahls 3 hineinzudrehen und so einen Teil des Laserstrahls 3 auszublenden. Abhängig vom Drehwinkel α des Spiegels 21 wird der Laserstrahl 3 vom Spiegel 21 vollständig, teilweise oder nicht durchgelassen. Der Winkel zwischen Laserstrahl 3 und Spiegel 21 beträgt vorzugsweise 45°, so dass der auf den Spiegel 21 auftreffende Laserstrahl um 90° umgelenkt wird. In **Fig. 2b** ist die vom Modulator 20 durchgelassene Leistung P_{mod} des modulierten Laserstrahls 7 in Abhängigkeit vom Drehwinkel α aufgetragen. Mit dem Modulator 20 kann die Leistung P_{mod} des modulierten Laserstrahls 7 kontinuierlich zwischen ca. 0% und ca. 100% der Ausgangsleistung P₀ variiert werden.

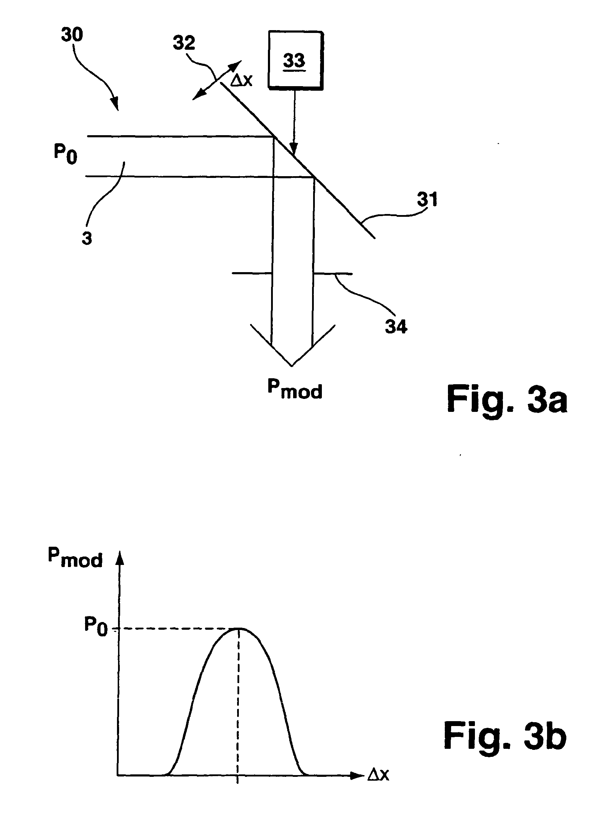

Der in **Fig. 3a** gezeigte Modulator **30** umfasst einen Umlenkspiegel **31**, der parallelverschiebbar (Doppelpfeil **32**) ist, einen z.B. als Schrittmotor ausgestalteten Stellantrieb **33** zum Verschieben des Spiegels 31 sowie eine Lochblende **34**, auf die der vom Spiegel 31 reflektierte Laserstrahl abgebildet wird. Abhängig vom Verschiebeweg **Δx** des Spiegels 31 wird der Laserstrahl 3 an der Lochblende 34 vollständig, teilweise oder nicht durchgelassen. In **Fig. 3b** ist die vom Modulator 30 durchgelassene Leistung P_{mod} des modulierten Laserstrahls 7 in Abhängigkeit des Verschiebewegs **Δx** aufgetragen. Mit dem Modulator 30 kann die Leistung P_{mod} des modulierten Laserstrahls 7 kontinuierlich zwischen ca. 0% und ca. 100% der Ausgangsleistung P₀ variiert werden.

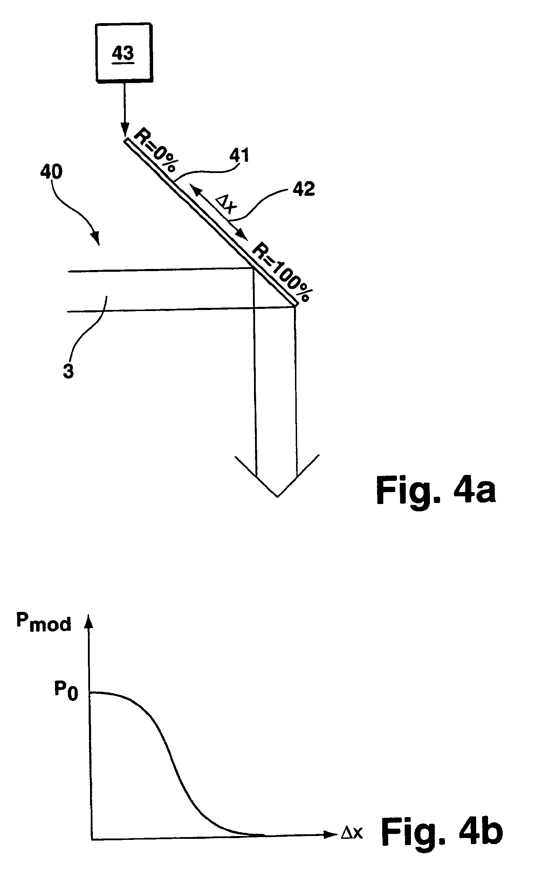

Der in **Fig. 4a** gezeigte Modulator **40** umfasst einen Verlaufspiegel **41,** der in Längsrichtung verschiebbar (Doppelpfeil **42**) ist, und einen z.B. als Schrittmotor ausgestalteten Stellantrieb **43** zum Verschieben des Spiegels **31**. Der Reflexionsgrad **R** des Spiegels **41** ändert sich in der Verschieberichtung kontinuierlich von R≈100% (vollständige Reflexion) bis auf R≈0% (keine Reflexion). Abhängig vom Verschiebeweg **Δx** des Spiegels 41 wird der Laserstrahl 3 am Spiegel 41 vollständig, teilweise oder nicht reflektiert. In **Fig. 4b** ist die vom Modulator 40 durchgelassene Leistung P_{mod} des modulierten Laserstrahls 7 in Abhängigkeit vom Verschiebeweg Δx aufgetragen. Mit dem Modulator 40 kann die Leistung P_{mod} des modulierten Laserstrahls 7 zwischen ca. 0% und ca. 100% der Ausgangsleistung P₀ variiert werden. Anstelle des gezeigten, linear verschiebbaren Verlaufspiegels 41 kann auch ein drehbar gelagerter Verlaufspiegel verwendet werden, dessen Reflexionsgrad sich mit dem radialen Abstand zur Drehachse ändert.

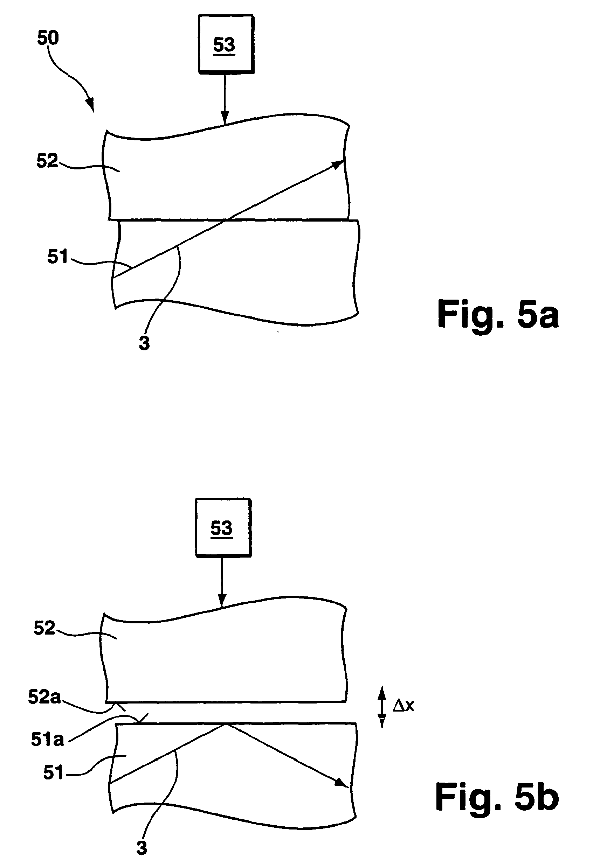

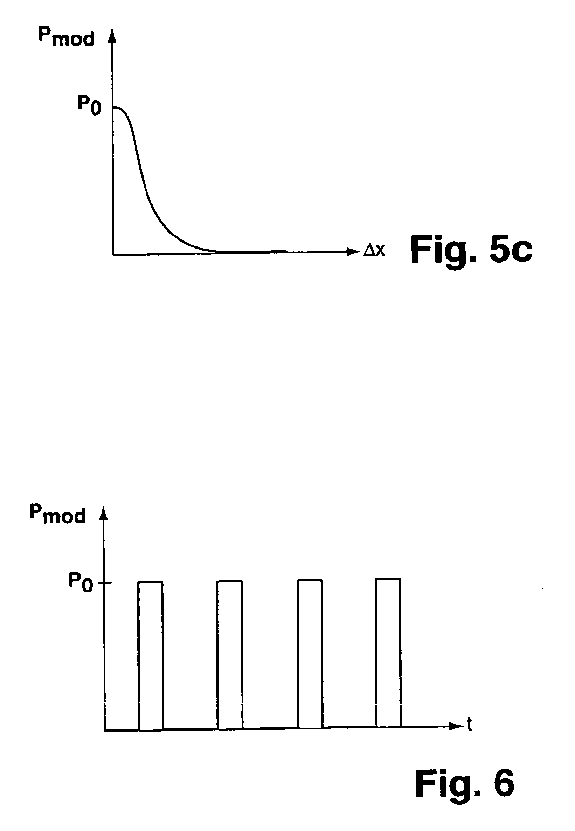

Der in **Fign. 5a und 5b** gezeigte Modulator **50** umfasst zwei Körper **51, 52** aus gleichem Material und mit einander zugewandten parallelen Außenflächen **51a, 52a** sowie einen z.B. piezoelektrischen Stellantrieb **53** für den zweiten Körper 52, um den Abstand **Δx** zwischen beiden Außenflächen 51a, 51b zu verändern. Der Laserstrahl 3 ist im ersten Körper 51 derart geführt, dass er schräg auf die Außenfläche 51 a des ersten Körper 51 trifft. In Fig. 5a liegen die beiden Körper 51, 52 mit ihren Außenflächen 51a, 52a aneinander an, d.h. Δx=0, so dass der schräg auf die Außenfläche 51a treffende Laserstrahl 3 innen an der Außenfläche 51a nicht totalreflektiert, sondern über die Außenfläche 52a in den zweiten Körper 52 eingekoppelt wird. In Fig. 5b sind die beiden Flächen so weit (einige µm) voneinander entfernt, dass der Laserstrahl 3 nunmehr innen an der Außenfläche 51a totalreflektiert und nicht in den zweiten Körper 52 eingekoppelt wird. Abhängig vom Abstand Δx wird der Laserstrahl 3 in den zweiten Körper 52 vollständig, teilweise oder nicht eingekoppelt, wobei sich der Einkopplungsgrad des Laserstrahls 3 in den zweiten Körper 52 kontinuierlich mit dem Abstand Δx ändert. In **Fig. 5c** ist die vom Modulator 50 durchgelassene Leistung P_{mod} des modulierten Laserstrahls 7 in Abhängigkeit vom Abstand Δx aufgetragen. Mit dem Modulator 50 kann die Leistung P_{mod} des modulierten Laserstrahls 7 kontinuierlich zwischen ca. 0% und ca. 100% der Ausgangsleistung P₀ variiert werden.

**Fig. 6** zeigt beispielhaft einen geregelten Verlauf der modulierten Laserleistung P_{mod} zum Ausbilden einer Step-Schweißnaht. Die Ausgangsleistung P₀ des Lasers 2 ist über den ersten Regelkreis 9 auf die für diesen Schweißvorgang maximale Laserleistung konstant eingestellt, und der Modulator wird über den zweiten Regelkreis 11 derart angesteuert, dass der auf die zu verschweißenden Werkstücke treffende Laserstrahl 7 eine als Rechteckimpulsfolge modulierte Leistung P_{mod} hat. Mit dem Modulator sind nicht nur Rechteckpulse, sondern beliebige Pulsformen möglich. Weiterhin kann durch die Regeleinheit 8 eine im Vergleich zur Modulation langsame Änderung der Leistung P₀ durchgeführt werden.

## Patentansprüche

1. Laserbearbeitungsmaschine (1) mit einem Laser (2) mit Pumpquelle und mit einem Regelkreis (11), der einen im Strahlengang des Laserstrahls (3) angeordneten Modulator (5; 20; 30; 40; 50) zur Veränderung der Leistung (P₀) des vom Laser (2) abgestrahlten Laserstrahls (3), einen im Strahlengang des Laserstrahls (3) angeordneten Sensor (6) zur Erfassung der Leistung (P_{mod}) des modulierten Laserstrahls (7), und eine Steuer- bzw. Regeleinheit (10) zur Ansteuerung des Modulators (5; 20; 30; 40; 50) auf der Basis der Messwerte des Sensors (6) entsprechend einem vorgegebenen zeitlichen Laserleistungsverlauf aufweist,
**gekennzeichnet durch**
einen weiteren Steuer- oder Regelkreis (9), der den Laser (2) derart steuert bzw. regelt, dass der vom Laser (2) ausgegebene Laserstrahl (3) eine konstante Ausgangsleistung (P₀) hat, sodass die Leistung (P₀) des auf den Modulator (5; 20; 30; 40; 50) treffenden Laserstrahls (3) konstant oder im Wesentlichen konstant ist, wobei der weitere Steuer- oder Regelkreis (9) einen die Ausgangsleistung (P₀) des vom Laser (2) ausgegebenen Laserstrahls (3) erfassenden Sensor (4) und eine Steuer- bzw. Regeleinheit (8) aufweist, welche den Laser (2) auf der Basis der Messwerte des Sensors (4) ansteuert.

2. Laserbearbeitungsmaschine nach Anspruch 1, **dadurch gekennzeichnet, dass** der Modulationsgrad des Modulators (5; 20; 30; 40; 50) zwischen einem Minimalwert und einem Maximalwert kontinuierlich verstellbar ist.

3. Laserbearbeitungsmaschine nach Anspruch 1 oder 2, **dadurch gekennzeichnet, dass** der Modulator (20) eine in den Strahlengang des Laserstrahls (3) hineinbewegbare Blende, insbesondere einen Kantenspiegel (21), und einen Stellantrieb (24) für die Blende aufweist.

4. Laserbearbeitungsmaschine nach Anspruch 1 oder 2, **dadurch gekennzeichnet, dass** der Modulator (30) einen im Strahlengang des Laserstrahls (3) beweglich gelagerten Spiegel (31), einen Stellantrieb (33) für den Spiegel (31) und eine im Strahlengang des vom Spiegel (31) reflektierten Laserstrahls angeordnete Blende, insbesondere eine Lochblende (34), aufweist.

5. Laserbearbeitungsmaschine nach Anspruch 1 oder 2, **dadurch gekennzeichnet, dass** der Modulator (40) einen in den Strahlengang des Laserstrahls (3) hineinbewegbaren Spiegel (41), dessen Reflexionsgrad sich in Bewegungsrichtung des Spiegels (41) ändert, und einen Stellantrieb (43) für den Spiegel (41) aufweist.

6. Laserbearbeitungsmaschine nach Anspruch 1 oder 2, **dadurch gekennzeichnet, dass** der Modulator (50) zwei optisch transparente Körper (51, 52) mit einander zugewandten parallelen Außenflächen (51 a, 52a) und einen Stellantrieb (53) zum Verändern des Abstands der beiden Körper (51 a, 52a) aufweist, wobei der in den ersten Körper (51) eingekoppelte Laserstrahl (3) schräg auf die Außenfläche (51 a) des ersten Körpers (51) trifft.

7. Laserbearbeitungsmaschine nach einem der vorhergehenden Ansprüche, **dadurch gekennzeichnet, dass** der Modulator (5; 20; 30; 40; 50) einen elektromagnetischen, magnetostriktiven oder piezoelektrischen Stellantrieb (24, 34, 43, 53) aufweist.

8. Laserbearbeitungsmaschine nach Anspruch 1 oder 2, **dadurch gekennzeichnet, dass** der Modulator ein elektro-optischer oder ein akustooptischer Modulator ist.

## Claims

1. Laser processing machine (1) which has a laser (2) having a pump source and an adjustment circuit (11) which has, for adjusting the power (P₀) of the laser beam (3) emitted by the laser (2), a modulator (5; 20; 30; 40; 50) which is arranged in the beam path of the laser beam (3), a sensor (6) for detecting the power (P_{mod}) of the modulated laser beam (7), which sensor (6) is arranged in the beam path of the laser beam (3), and a control or adjustment unit (10) for controlling the modulator (5; 20; 30; 40; 50) based on the measurement values of the sensor (6) in accordance with a predetermined temporal laser power progression,
**characterised by**
an additional control or adjustment circuit (9) which controls or adjusts the laser (2) in such a manner that the laser beam (3) emitted by the laser (2) has a constant output power (P₀) so that the power (P₀) of the laser beam (3) which strikes the modulator (5; 20; 30; 40; 50) is constant or substantially constant, the additional control or adjustment circuit (9) having a sensor (4) which detects the output power (P₀) of the laser beam (3) emitted by the laser (2) and a control or adjustment unit (8) which controls the laser (2) based on the measurement values of the sensor (4).

2. Laser processing machine according to claim 1, **characterised in that** the modulation degree of the modulator (5; 20; 30; 40; 50) can be continuously adjusted between a minimum value and a maximum value.

3. Laser processing machine according to claim 1 or 2, **characterised in that** the modulator (20) has a screen which can be moved into the beam path of the laser beam (3), in particular an angled mirror (21), and an adjustment drive (24) for the screen.

4. Laser processing machine according to claim 1 or 2, **characterised in that** the modulator (30) has a mirror (31) which is mounted so as to be able to be moved in the beam path of the laser beam (3), an adjustment drive (33) for the mirror (31) and a screen which is arranged in the beam path of the laser beam reflected by the mirror (31), in particular a perforated screen (34).

5. Laser processing machine according to claim 1 or 2, **characterised in that** the modulator (40) has a mirror (41) which can be moved into the beam path of the laser beam (3) and whose degree of reflection changes in the movement direction of the mirror (41), and an adjustment drive (43) for the mirror (41).

6. Laser processing machine according to claim 1 or 2, **characterised in that** the modulator (50) has two optically transparent members (51, 52) with mutually facing parallel outer faces (51a, 52a) and an adjustment drive (53) for adjusting the spacing of the two members (51a, 52a), the laser beam (3) which is coupled in the first member (51) striking the outer face (51a) of the first member (51) in an inclined manner.

7. Laser processing machine according to any one of the preceding claims, **characterised in that** the modulator (5; 20; 30; 40; 50) has an electromagnetic, magnetostrictive or piezoelectric adjustment drive (24, 34, 43, 53).

8. Laser processing machine according to claim 1 or 2, **characterised in that** the modulator is an electro-optic or an acousto-optic modulator.

## Revendications

1. Machine d'usinage au laser (1) comprenant un laser (2) avec source de pompage et comprenant un circuit de régulation (11) qui présente un modulateur (5 ; 20 ; 30 ; 40 ; 50) disposé dans le chemin optique du faisceau laser (3) pour faire varier la puissance (P₀) du faisceau laser (3) émis par le laser (2), un capteur (6) disposé dans le chemin optique du faisceau laser (3) pour saisir la puissance (P_{mod}) du faisceau laser modulé (7) et une unité de commande ou de régulation (10) pour commander le modulateur (5 ; 20 ; 30 ; 40 ; 50) sur la base des valeurs mesurées par le capteur (6) selon une variation dans le temps prédéfinie de la puissance de laser,
**caractérisée par**
un autre circuit de commande ou de régulation (9) qui commande ou régule le laser (2) de telle manière que le faisceau laser (3) émis par le laser (2) ait une puissance de sortie (P₀) constante, de sorte que la puissance (P₀) du faisceau laser (3) atteignant le modulateur (5 ; 20 ; 30 ; 40 ; 50) soit constante ou essentiellement constante, l'autre circuit de commande ou de régulation (9) présentant un capteur (4) saisissant la puissance de sortie (P₀) du faisceau laser (3) émis par le laser (2) et une unité de commande ou de régulation (8) qui commande le laser (2) sur la base des valeurs mesurées par le capteur (4).

2. Machine d'usinage au laser selon la revendication 1, **caractérisée en ce que** le degré de modulation du modulateur (5 ; 20 ; 30 ; 40 ; 50) est réglable de façon continue entre une valeur minimale et une valeur maximale.

3. Machine d'usinage au laser selon la revendication 1 ou 2, **caractérisée en ce que** le modulateur (20) présente un diaphragme déplaçable dans le chemin optique du faisceau laser (3), en particulier un miroir à arêtes (21) et un servomoteur (24) pour le diaphragme.

4. Machine d'usinage au laser selon la revendication 1 ou 2, **caractérisée en ce que** le modulateur (30) présente un miroir (31) monté mobile dans le chemin optique du faisceau laser (3), un servomoteur (33) pour le miroir (31) et un diaphragme disposé dans le chemin optique du faisceau laser réfléchi par le miroir (31), en particulier un diaphragme perforé (34).

5. Machine d'usinage au laser selon la revendication 1 ou 2, **caractérisée en ce que** le modulateur (40) présente un miroir (41) déplaçable dans le chemin optique du faisceau laser (3), dont le degré de réflexion varie dans la direction de déplacement du miroir (41), et un servomoteur (43) pour le miroir (41).

6. Machine d'usinage au laser selon la revendication 1 ou 2, **caractérisée en ce que** le modulateur (50) présente deux corps optiquement transparents (51, 52) avec des surfaces extérieures (51a, 52a) parallèles tournées l'une vers l'autre et un servomoteur (53) pour faire varier la distance des deux corps (51a, 52a), le faisceau laser (3) couplé dans le premier corps (51) atteignant obliquement la surface extérieure (51a) du premier corps (51).

7. Machine d'usinage au laser selon l'une des revendications précédentes, **caractérisée en ce que** le modulateur (5 ; 20 ; 30 ; 40 ; 50) présente un servomoteur (24, 34, 43, 53) électromagnétique, magnétostrictif ou piézoélectrique.

8. Machine d'usinage au laser selon la revendication 1 ou 2, **caractérisée en ce que** le modulateur est un modulateur électro-optique ou acoustico-optique.
